# EUROPÄISCHE PATENTSCHRIFT

(11) **EP 2 730 795 B1**
(45) Veröffentlichungstag und Bekanntmachung des Hinweises auf die Patenterteilung: **07.01.2015**
(21) Anmeldenummer: 12007686.4
(22) Anmeldetag: 13.11.2012
(51) Int. Cl.: F16D 3/84

(54) **Manschette**
Cuff
Manchette

(43) Veröffentlichungstag der Anmeldung: 14.05.2014
(73) Patentinhaber: Carl Freudenberg KG, 69469 Weinheim (DE)
(72) Erfinder: Wache, Hans-Martin, 15345 Eggersdorf (DE)

(56) Entgegenhaltungen:
- EP-A2- 1 182 372
- EP-B1- 1 273 834
- JP-A- 2006 118 612
- JP-A- 2008 082 431

## Beschreibung

### Technisches Gebiet

Die Erfindung betrifft eine Manschette, umfassend einen Balg aus einem gummielastischen Werkstoff, der stirnseitig einerseits zumindest zwei sich radial nach innen und in Umfangsrichtung der Stirnseite des Balgs erstreckende taschenförmige Auswölbungen mit jeweils zwei mit axialem Abstand zueinander benachbart angeordneten Flanken aufweist und wobei der Balg und die Auswölbungen einstückig und materialeinheitlich ausgebildet sind.

### Stand der Technik

Eine solche Manschette ist aus der JP 2008-082431 A, der EP 1 182 372 A2 und der JP 2006-118612 A bekannt. Zusätzlich ist aus der JP 2008-082431 A bekannt, dass jede Flanke radial außenseitig eine sich in axialer Richtung erstreckende Erhöhung aufweist, um die Manschette besser auf dem Zapfen eines Gelenks befestigen zu können.

Eine weitere Manschette ist aus der EP 1 273 834 B1 bekannt. Der Balg der vorbekannten Manschette weist im Bereich einer seiner Stirnseiten drei gleichmäßig in Umfangsrichtung verteilt angeordnete, sich radial nach innen erstreckende Tripode-Elemente auf, wobei jedes Tripode-Element zumindest zwei in axialer Richtung mit Abstand benachbart zueinander angeordnete Lamellen aufweist, die jeweils als Dichtelement ausgebildet und an einen Zapfen eines kongruent gestalteten Tripode-Gelenks dichtend anlegbar sind. Der Balg, die Tripode-Elemente und die Lamellen sind einstückig ineinander übergehend und materialeinheitlich ausgebildet und in einem einstufigen Blasverfahren urgeformt. Innerhalb des axialen Abstands zwischen einander axial benachbarten Lamellen ist jeweils zumindest ein Stützsteg zur gegenseitigen Abstützung der Lamellen angeordnet.

### Darstellung der Erfindung

Der Erfindung liegt die Aufgabe zugrunde, eine Manschette der eingangs genannten Art derart weiterzuentwickeln, dass sie besonders sicher und dicht auf einem Zapfen eines Gelenks festlegbar ist und dass die Auswölbungen in axialer Richtung stabilisiert sind und dadurch eine gute Abdichtung des Balgs im Bereich der Auswölbungen sichergestellt ist.

Diese Aufgabe wird erfindungsgemäß durch eine Manschette gemäß Anspruch 1 gelöst. Auf vorteilhafte Ausgestaltungen nehmen die auf Anspruch 1 direkt oder indirekt rückbezogenen Ansprüche Bezug.

Zur Lösung der Aufgabe ist es vorgesehen, dass jede Flanke radial außenseitig eine sich radial nach außen und in Umfangsrichtung erstreckende Aufwölbung aufweist und dass jede Flanke zumindest eine sich quer zu ihr erstreckende Versteifungsrippe aufweist, die sich von der jeweiligen Aufwölbung radial nach innen in die jeweilige Auswölbung erstreckt.

Die Auswölbungen bewirken zum einen eine Abdichtung für das Schmiermittel des Gelenks in Richtung der Umgebung, und zum anderen wird verhindert, dass Verunreinigungen aus der Umgebung in das Gelenk eindringen und dadurch zu einer Beschädigung oder Zerstörung des Gelenks führen können.

Jede Flanke weist radial außenseitig eine sich radial nach außen und in Umfangsrichtung erstreckende Aufwölbung auf. Die Aufwölbung bewirkt, dass die Manschette besonders sicher und dicht auf dem Zapfen des Gelenks festlegbar ist.

Die Aufwölbungen der Flanken sind während der bestimmungsgemäßen Verwendung der Manschette von einem Befestigungsband umschlossen, durch das die Manschette auf dem Zapfen befestigt ist. Das Befestigungsband umschließt die Manschette stirnseitig im Bereich der Aufwölbungen und bewirkt dadurch eine Einebnung der Aufwölbungen, wobei der elastomere Werkstoff der Aufwölbungen, der in radialer Richtung nach innen in die jeweiligen Auswölbungen verdrängt wird, zu einer Verspannung der Manschette in diesem Bereich mit dem Gelenk und damit zu einer sicheren Festlegung der beiden Teile aneinander führt.

Jede Flanke weist zumindest eine sich quer zu ihr erstreckende Versteifungsrippe auf, die sich von der jeweiligen Aufwölbung radial nach innen in die jeweilige Auswölbung erstreckt.

Die Versteifungsrippen haben die Aufgabe, die Auswölbungen in axialer Richtung zu stabilisieren und dadurch eine gute Abdichtung des Balgs im Bereich der Auswölbungen sicherzustellen.

Die Versteifungsrippen einander axial benachbarter Flanken einer Auswölbung können einander in axialer Richtung gegenüberliegend und in Umfangsrichtung in der Mitte der jeweiligen Auswölbung angeordnet sein.

Die Versteifungsrippen einander axial benachbarter Flanken können aus der jeweiligen Auswölbung in axial entgegengesetzter Richtung aus den jeweiligen Flanken hervorstehen und axial voneinander abgewandt sein.

Dadurch ist die Abstützung der Auswölbung in axialer Richtung besonders wirkungsvoll.

Nach einer vorteilhaften Ausgestaltung kann der Balg drei Auswölbungen aufweisen, die als Tripode-Elemente ausgebildet und gleichmäßig in Umfangsrichtung verteilt angeordnet sind.

Eine besonders einfach und kostengünstig herzustellende Ausführungsform der Manschette kann dadurch erreicht werden, dass jedes Tripode-Element nur eine Auswölbung umfasst.

Im Gegensatz zu Tripode-Elementen, die jeweils aus mehreren relativ filigranen lamellenförmigen Auswölbungen bestehen, weist die nur eine Auswölbung pro Tripode-Element durch die relativ stabile Dimensionierung bei insgesamt etwa gleichen Abmessungen eine vergleichsweise größere Formstabilität auf, so dass insbesondere die Montage des Balgs vereinfacht und die Gefahr von Montagefehlern auf ein Minimum reduziert ist.

Für viele Anwendungsfälle ist es vorteilhaft, wenn das Verhältnis aus der größten radialen Tiefe einer jeden Auswölbung zum axialen Abstand zwischen den entsprechenden einander benachbarten Flanken der Auswölbung 1,5 bis 2,5 beträgt. Die Formstabilität der Auswölbungen, speziell in axialer Richtung, ist dadurch groß genug, um den Balg einfach und prozesssicher montieren zu können.

Jede Auswölbung kann zumindest zwei in axialer Richtung mit Abstand benachbart zueinander angeordnete Lamellen aufweisen, die jeweils als Dichtelement ausgebildet und an einen Achszapfen eines kongruent gestalteten Tripode-Gelenks dichtend anlegbar sind. Die Abdichtung der Manschette auf dem Achszapfen eines Tripode-Gelenks ist durch die Lamellen besonders gut.

Der Balg kann als Faltenbalg ausgebildet sein. Dadurch kann der Balg axialen, radialen oder kardanischen Bewegungen des Zapfens, auf dem der Balg montiert ist, gut folgen. Durch die geringen mechanischen Belastungen, die auf den Faltenbalg wirken, hat dieser gleichbleibend gute Gebrauchseigenschaften während einer langen Gebrauchsdauer.

Der Balg kann, zusammen mit den Auswölbungen, mittels Blasverfahren einstufig urgeformt sein. In einem solchen Blasverfahren können besonders gut Bälge hergestellt werden, die aus einem thermoplastischen Elastomer bestehen.

Jede Flanke kann radial außenseitig eine sich radial nach außen und in Umfangsrichtung erstreckende Aufwölbung aufweisen und eine sich in axialer Richtung erstreckende Erhöhung.

Es kann auch vorgesehen sein, dass jede Flanke radial außenseitig eine sich in axialer Richtung erstreckende Erhöhung aufweist.

Die Aufwölbung und/oder die Erhöhung bewirken, dass die Manschette besonders sicher und dicht auf dem Zapfen des Gelenks festlegbar ist.

Nach einer besonders vorteilhaften Ausgestaltung kann es vorgesehen sein, dass jede Flanke eine Aufwölbung und eine Erhöhung aufweist.

Die Aufwölbungen und/oder die Erhöhungen der Flanken sind während der bestimmungsgemäßen Verwendung der Manschette von einem Befestigungsband umschlossen, durch das die Manschette auf dem Zapfen befestigt ist. Das Befestigungsband umschließt die Manschette stirnseitig im Bereich der Aufwölbungen und/oder Erhöhungen und bewirkt dadurch eine Einebnung der Aufwölbungen und/oder der Erhöhungen, wobei der elastomere Werkstoff der Aufwölbungen und/oder Erhöhungen, der in radialer Richtung nach innen in die jeweiligen Auswölbungen verdrängt wird, zu einer Verspannung der Manschette in diesem Bereich mit dem Gelenk und damit zu einer sicheren Festlegung der beiden Teile aneinander führt.

Die Aufwölbungen können, in Umfangsrichtung betrachtet, über die Mitte der jeweiligen Auswölbungen kuppelförmig ausgebildet sein. Weiter bevorzugt können die Aufwölbungen, in Umfangsrichtung betrachtet, über die Mitte der jeweiligen Auswölbungen symmetrisch ausgebildet sein.

Durch eine solche Ausgestaltung wird eine problemlose Befestigung des Befestigungsbands auf der Stirnseite der Manschette erreicht und eine gleichmäßige Verdrängung des elastomeren Werkstoffs, aus dem die Aufwölbungen bestehen. Unerwünscht hohe Spannungsspitzen im elastomeren Werkstoff werden durch eine solche Ausgestaltung verhindert.

Entsprechend verhält es sich mit den Erhöhungen.

Nach einer vorteilhaften Ausgestaltung kann es vorgesehen sein, dass die beiden mit axialem Abstand zueinander benachbart angeordneten Flanken der jeweiligen Auswölbung radial außenseitig, in axialer Richtung betrachtet, gemeinsam eine im Wesentlichen satteldachförmige Oberfläche aufweisen, die durch die Erhöhungen gebildet ist.

Die Erhöhungen einander axial benachbarter Flanken können jeweils keilförmig ausgebildet und gegensinnig geneigt, bezogen auf die Symmetrieachse des

Balgs, angeordnet sein und mit der Symmetrieachse des Balgs jeweils einen Winkel einschließen, der höchstens 20° beträgt.

Die Größe der zuvor genannten Winkel hat Einfluss auf das verdrängte Volumen der Erhöhungen bei einer Montage des Balgs auf dem Zapfen durch das Befestigungsband. Je größer die zuvor genannten Winkel sind, desto größer ist auch das verdrängte Volumen während der Montage des Balgs auf dem Zapfen und desto größer ist die elastische Vorspannung, mit der die Stirnseite des Balgs den Zapfen umschließt.

Für die meisten Anwendungsfälle ist es vorteilhaft, wenn die Winkel 5° bis 15° betragen.

Winkel größer als 20° sind demgegenüber wenig sinnvoll, weil Winkel größer 20° es praktisch kaum noch erlauben, dass das Befestigungsband die Stirnseite des Balgs in Umfangsrichtung mit weitgehend gleichmäßiger radialer Vorspannung an den Zapfen dichtend andrückt.

Die Winkel der Erhöhungen sind bevorzugt gleich groß. Dadurch wird im Bereich beider Erhöhungen eine übereinstimmende Verpressung radial nach innen erzielt.

Außerdem betrifft die Erfindung eine Manschettenanordnung, umfassend einen Balg auf einem Zapfen eines Gelenks.

Solche Manschettenanordnungen sind allgemein bekannt, wobei der Balg als Tripode-Balg mit Tripode-Elementen ausgebildet und auf einem Tripode-Gelenk befestigt ist.

Der beanspruchten Manschettenanordnung liegt die Aufgabe zugrunde, diese derart weiterzuentwickeln, dass der Balg und das Gelenk haltbarer miteinander verbunden werden können und dass die Verbindung während einer langen Gebrauchsdauer gute Gebrauchseigenschaften, insbesondere im Hinblick auf eine gute Abdichtung zwischen Balg und Gelenk, aufweist.

Zur Lösung dieser Aufgabe ist eine Manschettenanordnung vorgesehen, umfassend einen Zapfen eines Gelenks und einen Balg, wie zuvor beschrieben, der auf dem Zapfen angeordnet ist und dessen die Aus- und Aufwölbungen und/oder Erhöhungen aufweisende Stirnseite von einem Befestigungsband unter radialer Vorspannung und Einebnung der Aufwölbungen und/oder Erhöhungen umschlossen ist.

Durch die Einebnung der Aufwölbungen und/oder Erhöhungen mittels des Befestigungsbands bei der Montage des Balgs auf dem Zapfen des Gelenks, weist der Balg besonders formstabile Auswölbungen auf, die speziell in diesem Bereich eine dichte Verbindung zum Zapfen während einer langen Gebrauchsdauer sicherstellen.

### Kurzbeschreibung der Zeichnung

Ein Ausführungsbeispiel der erfindungsgemäßen Manschette wird nachfolgend anhand der Figuren 1 bis 5 näher erläutert. Die Figuren 1 bis 5 zeigen jeweils in schematischer Darstellung:
- Fig. 1: eine perspektivische Darstellung einer Manschette im Bereich der Stirnseite, mit der sie auf einem kongruent gestalteten Zapfen eines Gelenks befestigbar ist,
- Fig. 2: einen vergrößerten Ausschnitt aus der Manschette aus Fig. 1, wobei eine der taschenförmigen Auswölbungen gezeigt ist,
- Fig. 3: eine Ansicht der Manschette aus den Fig. 1 und 2 auf eine der taschenförmigen Auswölbungen,
- Fig. 4: die Aufwölbungen von axial benachbart zueinander angeordneten Flanken einer Auswölbung sowie Erhöhungen der Flanken,
- Fig. 5: die Manschette aus den Fig. 1 bis 4, die mittels eines Befestigungsbands auf dem Zapfen eines Gelenks befestigt ist und
- Fig. 6: eine Manschette, ähnlich der Manschette aus Fig. 1, mit abweichend gestalteten Auswölbungen.

### Ausführung der Erfindung

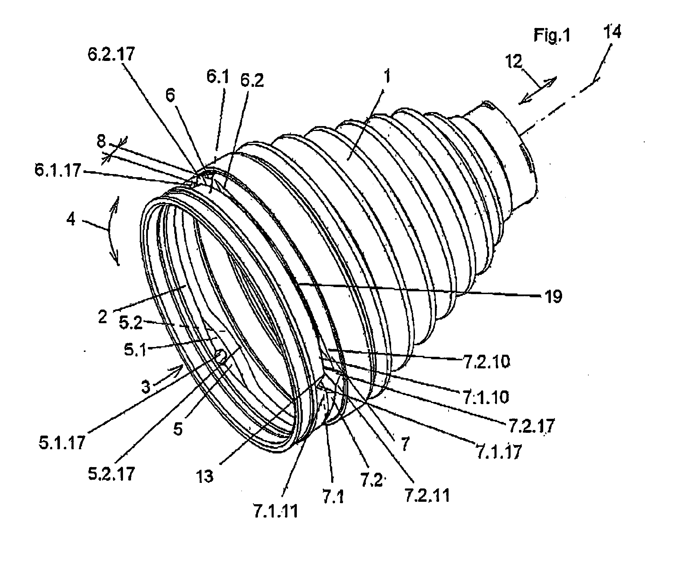

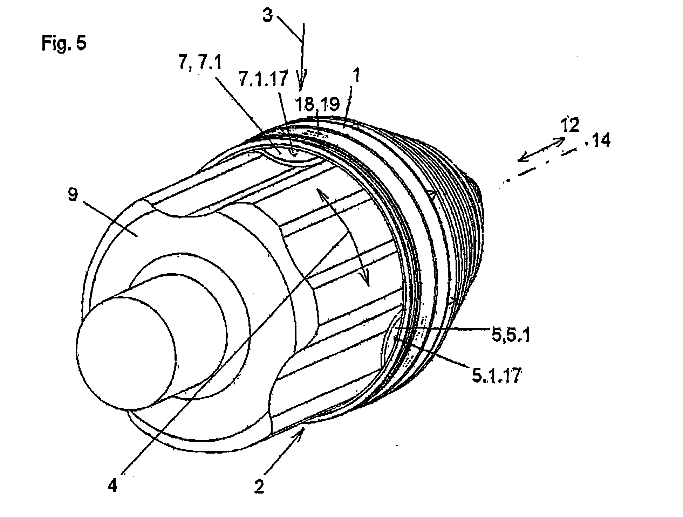

In den Fig. 1 bis 4 ist ein Beispiel einer erfindungsgemäßen Manschette gezeigt, in Fig. 5 eine erfindungsgemäße Manschettenanordnung mit einer solchen Manschette.

In Fig. 1 ist eine perspektivische Ansicht der Manschette gezeigt. Die Manschette umfasst einen Balg 1, der als Faltenbalg ausgebildet ist und aus einem gummielastischen Werkstoff, in diesem Ausführungsbeispiel aus einem thermoplastischen Elastomer, besteht. Im Bereich seiner einen Stirnseite 2 weist der Balg 1 drei als Tripode-Elemente ausgebildete Auswölbungen 5, 6, 7 auf, die gleichmäßig in Umfangsrichtung verteilt angeordnet sind und sich radial nach innen 3 in Umfangsrichtung 4 der Stirnseite 2 erstrecken. Die drei Auswölbungen 5, 6, 7 sind übereinstimmend ausgebildet und weisen jeweils zwei mit axialem Abstand 8 zueinander benachbart angeordnete Flanken 5.1, 5.2, 6.1, 6.2, 7.1, 7.2 auf. Der Balg 1 und die Auswölbungen 5, 6, 7 zusammen mit ihren Flanken 5.1, 5.2, 6.1, 6.2, 7.1, 7.2 sind einstückig und materialeinheitlich ausgebildet und in einem Blasverfahren einstufig hergestellt.

Um eine verbesserte Festlegung der Stirnseite 2 des Balgs 1 auf dem Zapfen 9 des Gelenks zu erreichen, hat der Balg sowohl Aufwölbungen 5.1.10, 5.2.10, 6.1.10, 6.2.10, 7.1.10, 7.2.10 als auch Erhöhungen 5.1.11, 5.2.11, 6.1.11, 6.2.11, 7.1.11, 7.2.11. Die Aufwölbungen 5.1.10, 5.2.10, 6.1.10, 6.2.10, 7.1.10, 7.2.10 und die Erhöhungen 5.1.11, 5.2.11, 6.1.11, 6.2.11, 7.1.11, 7.2.11 sind durch Materialanhäufungen gebildet, die sich radial nach außen erstrecken und im montierten Zustand der Manschette, der in Fig. 5 dargestellt ist, vom Befestigungsband 18 derart eingeebnet werden, dass sich ein im Wesentlichen kreisrunder Außendurchmesser der Stirnseite 2 ergibt. Die eingeebneten Aufwölbungen 5-1-10, 5.2.10, 6.1.10, 6.2.10, 7.1.10, 7.2.10 und Erhöhungen 5.1.11, 5.2.11, 6.1.11, 6.2.11, 7.1.11, 7.2.11 bewirken im Bereich der Auswölbungen 5, 6, 7 eine verstärkte elastische Vorspannung des Balgs 1 am Zapfen 9 des Gelenks und dadurch eine zuverlässige und dauerhaltbare sowie dichte Verbindung.

Die Aufwölbungen 5.1.10, 5.2.10, 6.1.10, 6.2.10, 7.1.10, 7.2.10 sind, in Umfangsrichtung 4 betrachtet, über die Mitte 13 der jeweiligen Auswölbungen 5, 6, 7 kuppetförmig und symmetrisch ausgebildet. Auch die Erhöhungen 5.1.11, 5.2.11, 6.1.11, 6.2.11, 7.1.11, 7.2.11 weisen keine sprunghaften Richtungsänderungen auf. Die beiden mit axialem Abstand 8 zueinander benachbart angeordneten Flanken 5.1, 5.2, 6.1, 6.2, 7.1, 7.2 der jeweiligen Auswölbungen 5, 6, 7 weisen radial außenseitig, in axialer Richtung 12 betrachtet, gemeinsam eine satteldachförmige Oberfläche auf. Diese satteldachförmige Oberfläche entsteht dadurch, dass die Erhöhungen 5.1.11, 5.2.11, 6.1.11, 6.2.11, 7.1.11, 7.2.11 jeweils keilförmig ausgebildet und gegensinnig geneigt angeordnet sind.

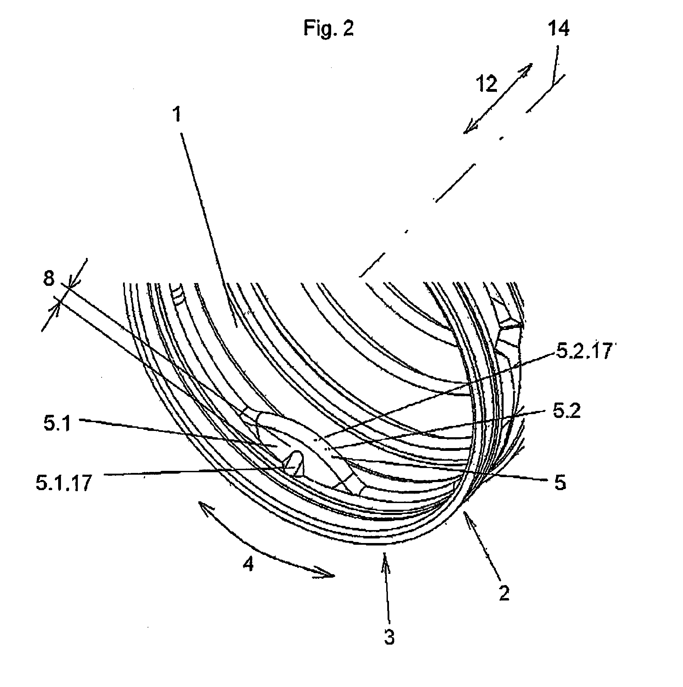

In Fig. 2 ist ein vergrößerter Ausschnitt aus dem Balg 1 aus Fig. 1 dargestellt. Gezeigt ist die Ansicht einer der Auswölbungen 5, 6, 7, die sich radial nach innen 3 und in Umfangsrichtung 4 der Stirnseite 2 erstrecken.

Zur hauptsächlich axialen Abstützung der Auswölbung 5 hat jede Flanke 5.1, 5.2 eine sich quer zu der Flanke 5.1, 5.2 erstreckende Versteifungsrippe 5.1.17, 5.2.17, wobei die axial im Balg 1 liegende Flanke 5.2 mit ihrer entsprechenden Versteifungsrippe 5.2.17 in dieser Darstellung nicht zu sehen ist.

Die Versteifungsrippen 5.1.17, 5.2.17 erstrecken sich von der jeweiligen Aufwölbung 5.1.10, 5.2.10 radial nach innen 3 in die Auswölbung 5, sind einander in axialer Richtung 12 gegenüberliegend und in Umfangsrichtung 4 in der Mitte 13 der Auswölbung 5 angeordnet und stehen axial in entgegengesetzter Richtung aus den Flanken 5.1, 5.2 hervor; sie sind einander also axial abgewandt.

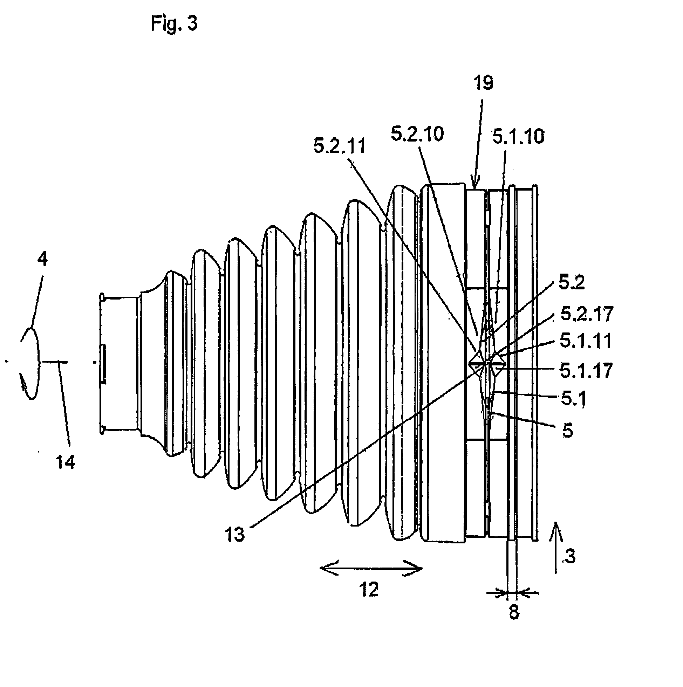

In Fig. 3 ist der Balg aus Fig. 1 in einer Ansicht gezeigt, wobei die Auswölbung 5, die in Fig. 2 von innen gezeigt ist, in Fig. 3 von außen zu sehen ist.

Im Bereich der Auswölbung 5 sind die Flanken 5.1, 5.2 außenumfangsseitig mit den zuvor bereits beschriebenen Aufwölbungen 5.1.10, 5.2.10 und Erhöhungen 5.1.11, 5.2.11 versehen, wobei, in Umfangsrichtung 4 betrachtet, in der Mitte 13 der Auswölbung 5 die Versteifungsrippen 5.1.17 und 5.2.17 angeordnet sind.

Die Auswölbungen 5, 6, 7, die Aufwölbungen 5.1.10, 5.2.10, 6.1.10, 6.2.10, 7.1.10, 7.2.10 und Erhöhungen 5.1.11, 5.2.11, 6.1.11, 6.2.11, 7.1.11, 7.2.11 der Flanken 5.1, 5.2, 6.1, 6.2, 7.1, 7.2 ebenso wie die Versteifungsrippen 5.1.17, 5.2.17, 6.1.17, 6.2.17, 7.1.17, 7.2.17 sind stirnseitig des Balgs 1 in einer Spur 19 angeordnet, die nutförmig ausgebildet ist und sich in Umfangsrichtung 4 um die Stirnseite 2 des Balgs 1 erstreckt, wobei in der Spur 19 während der bestimmungsgemäßen Verwendung der Manschette das Befestigungsband 18, wie später in Fig. 5 gezeigt, angeordnet ist. Die Auswölbungen 5, 6, 7 mit den Versteifungsrippen 5.1.17, 5.2.17, 6.1.17, 6.2.17, 7.1.17, 7.2.17 weisen eine axiale Breite auf, die im Wesentlichen der axialen Breite der Spur 19 und der axialen Breite des Befestigungsbands 18 entspricht.

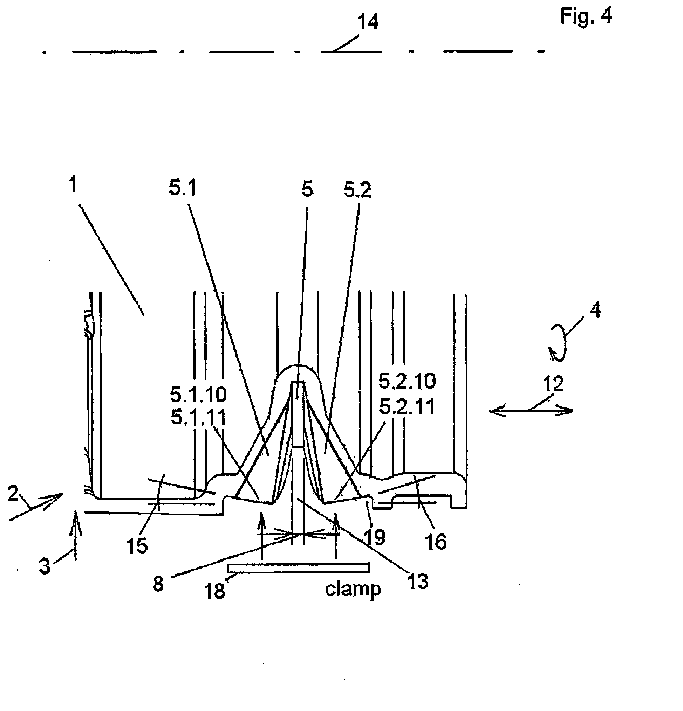

Die Aufwölbungen 5.1.10, 5.2.10, 6.1.10, 6.2.10, 7.1.10, 7.2.10 und die Erhöhungen 5.1.11, 5.2.11, 6.1.11, 6.2.11, 7.1.11, 7.2.11 werden nachfolgend anhand von Fig. 4 näher beschrieben.

In Fig. 4 ist ein Ausschnitt aus der Stirnseite 2 des Balgs im Bereich der Spur 19 gezeigt. Hier sind die radial nach außen gerichteten Materialanhäufungen, die durch die Aufwölbungen 5.1.10, 5.2.10 und die Erhöhungen 5.1.11, 5.2.11 gebildet sind, zu erkennen. Die Erhöhungen 5.1.11, 5.2.11 sind keilförmig ausgebildet, gegensinnig geneigt und bilden gemeinsam die satteldachförmige Oberfläche, wobei die Winkel 15, 16, den die Erhöhungen 5.1.11, 5.2.11 mit der Symmetrieachse 14 einschließen, gleich groß sind und zwischen 5° und 10° betragen.

Außerdem ist in Fig. 4 das Befestigungsband 18 schematisch dargestellt. Im Anschluss an die Befestigung des Balgs 1 auf dem Zapfen 9 wird die Spur 19 vom Befestigungsband 18 unter radialer Vorspannung und Einebnung der Aufwölbungen 5.1.10, 5.2.10, 6.1.10, 6.2.10, 7.1.10, 7.2.10 und Erhöhungen 5.1.11, 5.2.11, 6.1.11, 6.2.11, 7.1.11, 7.2.11 umschlossen. Dadurch wird der gummielastische Werkstoff der Aufwölbungen 5.1.10, 5.2.10, 6.1.10, 6.2.10, 7.1.10, 7.2.10 und der Erhöhungen 5.1.11, 5.2.11, 6.1.11, 6.2.11, 7.1.11, 7.2.11 radial nach innen in die Auswölbungen 5, 6, 7 verdrängt und es entsteht eine besonders haltbare und dichte Verbindung des Balgs 1 mit dem Zapfen 9.

In Fig. 5 ist die Manschettenanordnung gezeigt, die den auf dem Zapfen 9 des Gelenks angeordneten Balg 1 zeigt. Die Aufwölbungen 5.1.10, 5.2.10, 6.1.10, 6.2.10, 7.1.10, 7.2.10 und die Erhöhungen 5.1.11, 5.2.11, 6.1.11, 6.2.11, 7.1.11, 7.2.11 sind vom Befestigungsband 18, das in der Spur 19 angeordnet ist, eingeebnet, so dass die Auswölbungen 5, 6, 7, zusätzlich unterstützt durch die Versteifungsrippen 5.1.17, 5.2.17, 6.1.17, 6.2.17, 7.1.17, 7.2.17, in ihrer Form verstärkt sind.

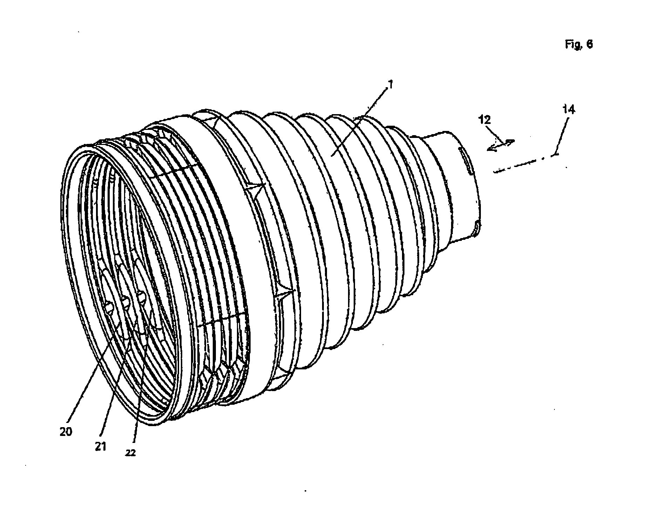

In Fig. 6 ist eine Manschette gezeigt, ähnlich der Manschette aus Fig.1, wobei jede Auswölbung 5, 6, 7 zumindest zwei, im gezeigten Ausführungsbeispiel drei, in axialer Richtung mit Abstand benachbart zueinander angeordnete Lamellen 20, 21, 22 aufweist. Die Lamellen 20, 21, 22 sind jeweils als Dichtelemente ausgebildet und an den Zapfen 9 eines kongruent gestalteten Tripode-Gelenks dichtend anlegbar.

## Patentansprüche

1. Manschette, umfassend einen Balg (1) aus einem gummielastischen Werkstoff, der stirnseitig (2) einerseits zumindest zwei sich radial nach innen (3) und in Umfangsrichtung (4) der Stirnseite (2) des Balgs (1) erstreckende taschenförmige Auswölbungen (5, 6, 7) mit jeweils zwei mit axialem Abstand (8) zueinander benachbart angeordneten Flanken (5.1, 5.2, 6.1, 6.2, 7.1, 7.2) aufweistund wobei der Balg (1) und die Auswölbungen (5, 6, 7) einstückig und materialeinheitlich ausgebildet sind, dadurch gekenntzeichnet, dass jede Flanke (5.1, 5.2, 6.1, 6,2, 7.1, 7.2) radial außenseitig eine sich radial nach außen und in Umfangsrichtung (4) erstreckende Aufwölbung (5.1.10, 5.2.10, 6.1.10, 6.2.10, 7.1.10, 7.2.10) aufweist und dass jede Flanke (5.1, 5.2, 6.1, 6.2, 7.1, 7.2) zumindest eine sich quer zu ihr erstreckende Versteifungsrippe (5.1.17, 5.2.17, 6.1.17, 6.2.17, 7.1.17, 7.2.17) aufweist, die sich von der jeweiligen Aufwölbung (5.1.10, 5.2.10, 6.1.10, 6.2.10, 7.1.10, 7.2.10) radial nach innen (3) in die jeweilige Auswölbung (5, 6, 7) erstreckt.

2. Manschette nach Anspruch 1, **dadurch gekennzeichnet, dass** die Versteifungsrippen (5.1.17, 5.2.17, 6.1.17, 6.2.17, 7.1.17, 7.2.17) einander axial benachbarter Flanken (5.1, 5.2, 6.1, 6.2, 7.1, 7.2) einer Auswölbung (5, 6, 7) einander in axialer Richtung (12) gegenüberliegend und in Umfangsrichtung (4) in der Mitte (13) der jeweiligen Auswölbung (5, 6, 7) angeordnet sind.

3. Manschette nach einem der Ansprüche 1 oder 2, **dadurch gekennzeichnet, dass** die Versteifungsrippen (5.1.17, 5.2.17, 6.1.17, 6.2.17, 7.1.17, 7.2.17) einander axial benachbarter Flanken (5.1, 5.2, 6.1, 6.2, 7.1, 7.2) aus der jeweiligen Auswölbung (5, 6, 7) in axial entgegengesetzter Richtung aus den jeweiligen Flanken (5.1, 5.2, 6.1, 6.2, 7.1, 7.2) hervor stehen und axial voneinander abgewandt sind.

4. Manschette nach einem der Ansprüche 1 bis 3, **dadurch gekennzeichnet, dass** der Balg (1) drei Auswölbungen (5, 6, 7) aufweist, die als Tripode-Elemente ausgebildet und gleichmäßig in Umfangsrichtung (4) verteilt angeordnet sind.

5. Manschette nach Anspruch 4, **dadurch gekennzeichnet, dass** jedes Tripode-Element nur eine Auswölbung (5, 6, 7) umfasst.

6. Manschette nach Anspruch 4, **dadurch gekennzeichnet, dass** jede Auswölbung (5, 6, 7) zumindest zwei in axialer Richtung (12) mit Abstand benachbart zueinander angeordnete Lamellen (20, 21, 22) aufweist, die jeweils als Dichtelement ausgebildet und an einen Achszapfen eines kongruent gestalteten Tripode-Gelenks dichtend anlegbar sind.

7. Manschette nach einem der Ansprüche 1 bis 6, **dadurch gekennzeichnet, dass** der Balg (1) als Faltenbalg ausgebildet ist.

8. Manschette nach einem der Ansprüche 1 bis 7, **dadurch gekennzeichnet, dass** der Balg (1) zusammen mit den Auswölbungen (5, 6, 7) mittels Blasverfahren einstufig urgeformt ist.

9. Manschette nach einem der Ansprüche 1 bis 8, **dadurch gekennzeichnet, dass** der Balg (1) aus einem thermoplastischen Elastomer besteht.

10. Manschette nach einem der Ansprüche 1 bis 9, **dadurch gekennzeichnet, dass** jede Flanke (5.1, 5.2, 6.1, 6.2, 7.1, 7.2) radial außenseitig eine sich radial nach außen und in Umfangsrichtung (4) erstreckende Aufwölbung (5.1.10, 5.2.10, 6.1.10, 6.2.10, 7.1.10, 7.2.10) aufweist und eine sich in axialer Richtung (12) erstreckende Erhöhung (5.1.11, 5.2.11, 6.1.11, 6.2.11, 7.1.11, 7.2.11).

11. Manschette nach einem der Ansprüche 1 bis 9, **dadurch gekennzeichnet, dass** jede Flanke (5.1, 5.2, 6.1, 6.2, 7.1, 7.2) radial außenseitig eine sich in axialer Richtung erstreckende Erhöhung (5.1.11, 5.2.11, 6.1.11, 6.2.11, 7.1.11, 7.2.11) aufweist.

12. Manschette nach einem der Ansprüche 10 oder 11, **dadurch gekennzeichnet, dass** die Aufwölbungen (5.1.10, 5.2.10, 6.1.10, 6.2.10, 7.1.10, 7.2.10), in Umfangsrichtung (4) betrachtet, über die Mitte (13) der jeweiligen Auswölbungen (5, 6, 7) kuppelförmig ausgebildet sind.

13. Manschette nach einem der Ansprüche 10 bis 12, **dadurch gekennzeichnet, dass** die Aufwölbungen, (5.1.10, 5.2.10, 6.1.10, 6.2.10, 7.1.10, 7.2.10), in Umfangsrichtung (4) betrachtet, über die Mitte (13) der jeweiligen Auswölbungen (5, 6, 7) symmetrisch ausgebildet sind.

14. Manschette nach einem der Ansprüche 10 bis 13, **dadurch gekennzeichnet, dass** die beiden mit axialem Abstand (8) zueinander benachbart angeordneten Flanken (5.1, 5.2, 6.1, 6.2, 7.1, 7.2) der jeweiligen Auswölbung (5, 6, 7) radial außenseitig, in axialer Richtung (12) betrachtet, gemeinsam eine im Wesentlichen satteldachförmige Oberfläche aufweisen, die durch die Erhöhungen (5.1.11, 5.2.11, 6.1.11, 6.2.11, 7.1.11, 7.2.11) gebildet ist.

15. Manschette nach Anspruch 14, **dadurch gekennzeichnet, dass** die Erhöhungen (5.1.11, 5.2.11, 6.1.11, 6.2.11, 7.1.11, 7.2.11) einander axial benachbarter Flanken (5.1, 5.2, 6.1, 6.2, 7.1, 7.2) jeweils keilförmig ausgebildet und gegensinnig geneigt, bezogen auf die Symmetrieachse (14) des Balgs (1), angeordnet sind und mit der Symmetrieachse (14) des Balgs (1) jeweils einen Winkel (15, 16) einschließen, der höchstens 20° beträgt.

16. Manschette nach Anspruch 15, **dadurch gekennzeichnet, dass** die Winkel (15, 16) beider Erhöhungen (5.1.11, 5.2.11, 6.1.11, 6.2.11, 7.1.11, 7.2.11) gleich groß sind.

17. Manschettenanordnung umfassend einen Zapfen (9) eines Gelenks und eine Manschette nach einem der Ansprüche 1 bis 16, der auf dem Zapfen (9) angeordnet ist und dessen die Aus- (5, 6, 7) und Aufwölbungen (5.1.10, 5.2.10, 6.1.10, 6.2.10, 7.1.10, 7.2.10) und/oder Erhöhungen (5.1.11, 5.2.11, 6.1.11, 6.2.11, 7.1.11, 7.2.11) aufweisende Stirnseite (2) von einem Befestigungsband (18) unter radialer Vorspannung und Einebnung der Aufwölbungen (5.1.10, 5.2.10, 6.1.10, 6.2.10, 7.1.10, 7.2.10) und/oder Erhöhungen (5.1.11, 5.2.11, 6.1.11, 6.2.11, 7.1.11, 7.2.11) umschlossen ist und wobei die Auswölbungen (5, 6, 7) an den kongruent gestalteten Zapfen (9) des Gelenks dichtend anlegbar sind.

## Claims

1. Grommet, comprising a concerning (1) made from an elastomeric material, which has on the end face (2), on one side, at least two pocket-shaped bulges (5, 6, 7) extending radially inwards (3) and in the circumferential direction (4) of the end face (2) of the concertina (1) and having in each case two flanks (5.1, 5.2, 6.1, 6.2, 7.1, 7.2) arranged adjacently to one another with an axial clearance (8), and the concertina (1) and the bulges (5, 6, 7) being formed in one piece and in a materially unitary manner **characterized in that** each flank (5.1, 5.2, 6.1, 6.2, 7.1, 7.2) has radially on the outside an arching (5.1.10, 5.2.10, 6.1.10, 6.2.10, 7.1.10, 7.2.10) extending radially outwards and in the circumferential direction (4) and **in that** each flank (5.1, 5.2, 6.1, 6.2, 7.1, 7.2) has at least one stiffening rib (5.1.17, 5.2.17, 6.1.17, 6.2.17, 7.1.17, 7.2.17) which extends transversely thereto and which extends from the respective arching (5.1.10, 5.2.10, 6.1.10, 6.2.10, 7.1.10, 7.2.10) radially inwards (3) into the respective bulge (5, 6, 7).

2. Grommet according to Claim 1, **characterized in that** the stiffening ribs (5.1.17, 5.2.17, 6.1.17, 6.2.17, 7.1.17, 7.2.17) of flanks (5.1, 5.2, 6.1, 6.2, 7.1, 7.2) of a bulge (5, 6, 7) which are axially adjacent to one another are arranged so as to lie opposite one another in the axial direction (12) and, in the circumferential direction (4), in the middle (13) of the respective bulge (5, 6, 7).

3. Grommet according to one of Claims 1 and 2, **characterized in that** the stiffening ribs (5.1.17, 5.2.17, 6.1.17, 6.2.17, 7.1.17, 7.2.17) of flanks (5.1, 5.2, 6,1, 6.2, 7.1, 7.2) axially adjacent to one another project out of the respective bulge (5, 6, 7) from the respective flanks (5.1, 5.2, 6.1, 6.2, 7.1, 7.2) pin an axially opposite direction and face axially away from one another.

4. Grommet according to one of claims 1 to 3, **characterized in that** the concertina (1) has three bulges (5, 6, 7) which are designed as tripod elements and are arranged so as to be distributed uniformly in the circumferential direction (4).

5. Grommet according to Claim 4, **characterized in that** each tripod element comprises only one bulge (5, 6, 7).

6. Grommet according to Claim 4, **characterized in that** each bulge (5, 6, 7) has at least two lamellae (20, 21, 22) which are arranged adjacently to one another in the axial direction (12) with a clearance and which are designed in each case as a sealing element and can be brought to bear sealingly against an axial pin of a congruently configured tripod joint.

7. Grommet according to one of Claims 1 to 6, **characterized in that** the concertina (1) is designed as a bellows.

8. Grommet according to one of Claims 1 to 7, **characterized in that** the concertina (1) is primary-formed, together with the bulges (5, 6, 7), in one stage by means of a blowing method.

9. Grommet according to one of Claims 1 to 8, **characterized in that** the concertina (1) consists of a thermoplastic elastomer.

10. Grommet according to one of Claims 1 to 9, **characterized in that** each flank (5.1, 5.2, 6.1, 6.2, 7.1, 7.2) has radially on the outside an arching (5.1.10, 5.2.10, 6.1.10, 6.2.10, 7.1.10, 7.2.10) extending radially outwards and in the circumferential direction (4) and an elevation (5.1.11, 5.2.11, 6.1.11, 6.2.11, 7.1.11, 7.2.11) extending in the axial direction (12).

11. Grommet according to one of Claims 1 to 9, **characterized in that** each flank (5.1, 5.2, 6.1, 6.2, 7.1, 7.2) has radially on the outside an elevation (5.1.11, 5.2.11, 6.1.11, 6.2.11, 7.1.11, 7.2.11) extending in the axial direction.

12. Grommet according to either one of Claims 10 and 11, **characterized in that** the archings (5.1.10, 5.2.10, 6.1.10, 6.2.10, 7.1.10, 7.2.10), as seen in the circumferential direction (4), are designed to be dome-shaped across the middle (13) of the respective bulges (5, 6, 7).

13. Grommet according to one of Claims 10 to 12, **characterized in that** the archings (5.1.10, 5.2.10, 6.1.10, 6.2.10, 7.1.10, 7.2.10), as seen in the circumferential direction (4), are designed to be symmetrical across the middle (13) of the respective bulges (5, 6, 7).

14. Grommet according to one of Claims 10 to 13, **characterized in that** the two flanks (5.1, 5.2, 6.1, 6.2, 7.1, 7.2) of the respective bulge (5, 6, 7) which are arranged adjacently to one another with an axial clearance (8) have radially on the outside, as seen in the axial direction (12), jointly a surface which is essentially in the form of a gable roof and which is formed by the elevations (5.1.11, 5.2.11, 6.1.11, 6.2.11, 7.1.11, 7.2.11).

15. Grommet according to Claim 14, **characterized in that** the elevations (5.1.11, 5.2.11, 6-1.11, 6.2.11, 7.1.11, 7.2.11) of flanks (5.1, 5.2, 6.1, 6.2, 7.1, 7.2) axially adjacent to one another are designed in each case to be wedge-shaped and are arranged so as to be inclined contradirectionally with respect to the axis of symmetry (14) of the concertina (1) and form with the axis of symmetry (14) of the concertina (1) in each case an angle (15, 16) which amounts to at most 20°.

16. Grommet according to Claim 15, **characterized in that** the angles (15, 16) of the two elevations (5.1.11, 5.2.11, 6.1.11, 6.2.11, 7.1.11, 7.2.11) are equal.

17. Grommet arrangement, comprising a pin (9) of a joint and a grommet according to one of Claims 1 to 16, which is arranged on the pin (9) and of which the end face (2) having bulges (5, 6, 7) and archings (5.1.10, 5.2.10, 6.1.10, 6.2.10, 7.1.7.0, 7.2.10) and/or elevations (5.1.11, 5.2.11, 6.1.11, 6.2.11, 7.1.11, 7.2.11) is surrounded by a fastening band (18) under radial prestress and with a flattening of the archings (5.1.10, 5.2.10, 6.1.10, 6.2.10, 7.1.10, 7.2.10) and/or elevations (5.1.11, 5.2.11, 6.1.11, 6.2.11, 7.1.11, 7.2.11) and the bulges (5, 6, 7) bering capable of being brought to bear sealingly against the congruently configured pin (9) of the joint.

## Revendications

1. Manchette, comprenant un soufflet (1) constitué d'un matériau ayant l'élasticité du caoutchouc, qui présente d'une part du côté frontal (2) au moins deux parties en creux (5, 6, 7) en forme de poche s'étendant radialement vers l'intérieur (3) et dans la direction périphérique (4) du côté frontal (2) du soufflet (1) avec à chaque fois deux flancs (5.1, 5.2, 6.1, 6.2, 7.1, 7.2) disposés de manière adjacente l'un à l'autre avec une distance axiale (8), le soufflet (1) et les parties en creux (5, 6, 7) étant réalisés d'une seule pièce et à partir du même matériau, **caractérisée en ce que** chaque flanc (5.1, 5.2, 6.1, 6.2, 7.1, 7.2) présente du côté radialement extérieur une partie bombée (5.1.10, 5.2.10, 6.1.10, 6.2.10, 7.1.10, 7.2.10) s'étendant radialement vers l'extérieur et dans la direction périphérique (4) et **en ce que** chaque flanc (5.1, 5.2, 6.1, 6.2, 7.1, 7.2) présente au moins une nervure de renforcement (5.1.17, 5.2.17, 6.1.17, 6.2.17, 7.1.17, 7.2.17) s'étendant transversalement par rapport à lui, laquelle s'étend depuis la partie bombée respective (5.1.10, 5.2.10, 6.1.10, 6.2.10, 7.1.10, 7.2.10) radialement vers l'intérieur (3) dans la partie en creux respective (5, 6, 7).

2. Manchette selon la revendication 1, **caractérisée en ce que** les nervures de renforcement (5.1.17, 5.2.17, 6.1.17, 6.2.17, 7.1.17, 7.2.17) de flancs (5.1, 5.2, 6.1, 6.2, 7.1, 7.2) adjacents axialement les uns aux autres d'une partie en creux (5, 6, 7) sont disposées en regard les unes des autres dans la direction axiale (12) et dans la direction périphérique (4) au milieu (13) de la partie en creux respective (5, 6, 7).

3. Manchette selon l'une quelconque des revendications 1 ou 2, **caractérisée en ce que** les nervures de renforcement (5.1.17, 5.2.17, 6.1.17, 6.2.17, 7.1.17, 7.2.17) de flancs (5.1, 5.2, 6.1, 6.2, 7.1, 7.2) adjacents axialement les uns aux autres font saillie hors de la partie en creux respective (5, 6, 7) dans la direction axialement opposée hors des flancs respectifs (5.1, 5.2, 6.1, 6.2, 7.1, 7.2) et sont opposées axialement les unes aux autres.

4. Manchette selon l'une quelconque des revendications 1 à 3, **caractérisée en ce que** le soufflet (1) présente trois parties en creux (5, 6, 7) qui sont réalisées sous forme d'éléments tripodes et qui sont disposées de manière répartie uniformément dans la direction périphérique (4).

5. Manchette selon la revendication 4, **caractérisée en ce que** chaque élément tripode ne comprend qu'une seule partie en creux (5, 6, 7).

6. Manchette selon la revendication 4, **caractérisée en ce que** chaque partie en creux (5, 6, 7) présente au moins deux lamelles (20, 21, 22) disposées à distance les unes à côté des autres dans la direction axiale (12), lesquelles sont réalisées à chaque fois sous forme d'élément d'étanchéité et peuvent être appliquées de manière hermétique contre un tourillon d'axe d'une articulation tripode configurée de manière correspondante.

7. Manchette selon l'une quelconque des revendications 1 à 6, **caractérisée en ce que** le soufflet (1) est réalisé sous forme de soufflet pliant.

8. Manchette selon l'une quelconque des revendications 1 à 7, **caractérisée en ce que** le soufflet (1) est formé initialement en une seule étape conjointement avec les parties en creux (5, 6, 7) par un procédé de soufflage.

9. Manchette selon l'une quelconque des revendications 1 à 8, **caractérisée en ce que** le soufflet (1) se compose d'un élastomère thermoplastique.

10. Manchette selon l'une quelconque des revendications 1 à 9, **caractérisée en ce que** chaque flanc (5.1, 5.2, 6.1, 6.2, 7.1, 7.2) présente radialement du côté extérieur une partie bombée (5.1.10, 5.2.10, 6.1.10, 6.2.10, 7.1.10, 7.2.10) s'étendant radialement vers l'extérieur et dans la direction périphérique (4) ainsi qu'un rehaussement (5.1.11, 5.2.11, 6.1.11, 6.2.11, 7.1.11, 7.2.11) s'étendant dans la direction axiale (12).

11. Manchette selon l'une quelconque des revendications 1 à 9, **caractérisée en ce que** chaque flanc (5.1, 5.2, 6.1, 6.2, 7.1, 7.2) présente radialement du côté extérieur un rehaussement (5.1.11, 5.2.11, 6.1.11, 6.2,11, 7.1.11, 7.2.11) s'étendant dans la direction axiale.

12. Manchette selon l'une quelconque des revendications 10 ou 11, **caractérisée en ce que** les parties bombées (5.1.10, 5.2.10, 6.1.10, 6.2.10, 7.1.10, 7.2.10), considérées dans la direction périphérique (4), sont réalisées en forme de coupelle sur le milieu (13) des parties en creux respectives (5, 6, 7).

13. Manchette selon l'une quelconque des revendications 10 à 12, **caractérisée en ce que** les parties bombées (5.1.10, 5.2.10, 6.1.10, 6.2.10, 7.1.10, 7.2.10), considérées dans la direction périphérique (4), sont réalisées de manière symétrique sur le milieu (13) des parties en creux respectives (5, 6, 7).

14. Manchette selon l'une quelconque des revendications 10 à 13, **caractérisée en ce que** les deux flancs (5.1, 5.2, 6.1, 6.2, 7.1, 7.2) disposés de manière adjacente l'un à l'autre avec une distance axiale (8) de la partie en creux respective (5, 6, 7) présentent radialement du côté extérieur, considéré dans la direction axiale (12), conjointement une surface essentiellement en forme de toit à deux versants, qui est formée par les rechaussements (5.1.11, 5.2.11, 6.1.11, 6.2.11, 7.1.11, 7.2.11).

15. Manchette selon à revendication 14, **caractérisée en ce que** les rechaussements (5.1.11, 5.2.11, 6.1.11, 6.2.11, 7.1.11, 7.2.11) de flancs axialement adjacents les uns aux autres (5.1, 5.2, 6.1, 6.2, 7.1, 7.2) sont réalisés à chaque fois en forme de clavettes et sont disposés de manière inclinée en sens opposé, par rapport à l'axe de symétrie (14) du soufflet (1), et forment avec l'axe de symétrie (14) du soufflet (1) à chaque fois un angle (15, 16) qui vaut au maximum 20°.

16. Manchette selon la revendication 15, **caractérisée en ce que** les anglets (15, 16) des deux rehaussements (5.1.11, 5.2.11, 6.1.11, 6.2.11, 7.1.11, 7.2.11) sont identiques.

17. Agencement de manchette, comprenait une tourillon (9) d'une articulation et une manchette selon l'une quelconque des revendications 1 à 16, qui est disposée sur le tourillon (9) et dont le côté frontal (2) présentant les parties en creux (5, 6, 7) et les parties bombées (5.1.10, 5.2.10, 6.1.10, 6.2.10, 7.1.10, 7.2.10) et/ou les rehaussements (5.1.11, 5.2.11, 6.1.11, 6.2.11, 7.1.11, 7.2.11) est entouré par une bande de fixation (18) avec précontrainte radiale et aplatissement des parties bombées (5.1.10, 5.2.10, 6.1.10, 6.2.10, 7.1.10, 7.2.10) et/ou des rechaussements (5.1.11, 5.2.11, 6.1.11, 6.2.11, 7.1.11, 7.2.11) est dans lequel les parties en creux (5, 6, 7) peuvent être appliquées de manière hermétique contre le tourillon (9) de l'articulation configuré de manière correspondante.
